# EUROPEAN PATENT APPLICATION

(11) **EP 3 896 488 A1**
(43) Date of publication of application: **20.10.2021**
(21) Application number: 18944015.9
(22) Date of filing: 18.12.2018
(51) Int. Cl.: G01S 17/08, G01S 7/481

(54) **LASER MEASURING DEVICE AND UNMANNED AERIAL VEHICLE**

(71) Applicant: SZ DJI Technology Co., Ltd., Shenzhen, Guangdong 518057 (CN)
(72) Inventor: WANG, Jiadi, Shenzhen, Guangdong 518057 (CN); HUANG, Huai, Shenzhen, Guangdong 518057 (CN)
(74) Representative: Goddar, Heinz J.
(86) International application number: PCT/CN2018/121689
(87) International publication number: WO 2020/124346

(57) **Abstract**

The present disclosure discloses a UAV (200) and a laser measuring device (100). The laser measuring device (100) includes a light transceiving module (20), a scanning module (30), and a reflection module (40). The light transceiving module (20) is configured to emit laser pulses and receive laser pulses reflected by a detection object. The scanning module (30) and the reflection module (40) are sequentially disposed along a light exiting path of the light transceiving module (20). The scanning module (30) includes a rotatable transmissive optical element (31), and the scanning module (30) being configured to change a transmission direction of the laser pulse passing through the scanning module (30). The reflection module (40) including a rotatable reflective optical element (43), and the reflective optical element (43) is configured to reflect the laser pulse passing through the reflective optical element (43).

## Description

### TECHNICAL FIELD

The present disclosure relates to the technical field of laser ranging and, more specifically, to a laser measuring device and an unmanned aerial vehicle (UAV).

### BACKGROUND

Laser measuring device, such as lidar, use optical remote sensing technology to measure distances. More specifically, the laser measuring device measures the distance between the laser measuring device and a target by emitting a light beam to the target, generally a pulsed laser, and calculating the time difference between the emitted pulsed laser and the received pulsed laser reflected by the target. However, the conventional laser measuring device has a limited field of view when emitting the light beam, and the range that can measure the target in the scene is relatively small.

### SUMMARY

The embodiments of the present disclosure provide a laser measuring device and a UAV.

The laser measuring device of the present disclosure includes a light transceiving module configured to emit laser pulses and receive laser pulses reflected by a detection object; a scanning module including a rotatable transmissive optical element, the scanning module being configured to change a transmission direction of the laser pulse passing through the scanning module; and a reflection module including a rotatable reflective optical element, the reflective optical element being configured to reflect the laser pulse passing through the reflective optical element. The scanning module and the reflection module are sequentially disposed on a light exiting path of the light transceiving module.

The UAV of the present disclosure includes a body and the laser measuring device of the embodiment described above. The laser measuring device is disposed on the body.

In the laser measuring device and the UAV of the present disclosure, since the transmissive optical element can change the transmission direction of the laser pulse passing through the transmissive optical element, and the transmissive optical element can rotate relative to the light transceiving module, therefore, the scanning module can increase the measuring range of the laser measuring device (more specifically, the scanning module can increase the angle of view of the laser measuring device). Further, since the reflective optical element can change the transmission direction of the laser pulse passing through the reflective optical element and the reflective optical element can rotate relative to the light transceiving module, such that the reflected laser pulse may be emitted to the detection object around the laser measuring device, and part of the returned light reflected by the detection object around laser measuring device 100 may also be reflected by the reflective optical element to the light transceiving module, therefore, the reflection module may further increase the measuring range of the laser measuring device. As such, the distance of all detection objects surrounding the entire laser measuring device (within a range of 360°) may be detected by the laser measuring device.

The laser measuring device of the present disclosure includes a light transceiving module configured to emit laser pulses and receiving laser pulses reflected by a detection object; and a reflection module disposed on the light exiting path of the light transceiving module. The reflection module includes a rotatable reflective optical element and a weight assembly relative fixed to the reflective optical element, the reflective optical element being configured to rotate around a rotation axis. The reflective optical element includes a reflective surface facing the light transceiving module, the reflective surface being inclined with respect to the rotation axis. The weight assembly is configured to weight the reflective optical element to reduce a centrifugal force couple received by the reflective optical element during rotation, the reflective optical element being configured to reflect the laser pulse passing through the reflective optical element.

The UAV of the present disclosure includes a body and the laser measuring device of the embodiment described above. The laser measuring device is disposed on the body.

In the UAV and the laser measuring device of the present disclosure, since the reflective surface of the reflective optical element may be inclined with respect to the rotation axis of the reflection module, the weight assembly may be disposed on the reflection module for weighting the reflective optical element, such that the centrifugal force couple applied to the reflection module when the reflective optical element rotates can be reduced, and the smoothness of the reflection module can be improved.

Additional aspects and advantages of the technical solutions of the present disclosure will be partially provided in the following descriptions, and partially become obvious from the following descriptions. Alternatively, the additional aspects and advantages of the technical solutions can be understood from practicing the various embodiments of the present disclosure.

### BRIEF DESCRIPTION OF THE DRAWINGS

These and other aspects and advantages of embodiments of the present disclosure will become apparent and more readily appreciated from the following descriptions made with reference to the drawings, in which:
FIG. 1 is a schematic diagram of a three-dimensional (3D) structure of a laser measuring device according to some embodiments of the present disclosure.
FIG. 2 is a 3D exploded schematic diagram of the laser measuring device according to some embodiments of the present disclosure.
FIG. 3 is a schematic diagram a light transceiving module of the laser measuring device according to some embodiments of the present disclosure.
FIG. 4 is a schematic diagram of a distance measurement principle and a schematic diagram of a module of the laser measuring device according to some embodiments of the present disclosure.
FIG. 5 is a schematic cross-sectional view of the distance detection device in FIG. 1 along a line V-V.
FIG. 6 is a schematic cross-sectional view of a reflection module of the laser measuring device according to some embodiments of the present disclosure.
FIG. 7 is a schematic diagram of a 3D structure of the laser measuring device according to some embodiments the present disclosure.
FIG. 8 is a schematic cross-sectional view of the distance detection device in FIG. 7 along a line VIII-VIII.
FIG. 9 to FIG. 11 are schematic diagrams of the 3D structure of a detector of the laser measuring device according to some embodiments the present disclosure.
FIG. 12 is a schematic structural diagram of a UAV according to some embodiments of the present disclosure.

### DETAILED DESCRIPTION OF THE EMBODIMENTS

Reference will now be made in detail to exemplary embodiments, examples of which are illustrated in the accompanying drawings, in which the same or similar reference numbers throughout the drawings represent the same or similar elements or elements having same or similar functions. Embodiments described below with reference to drawings are merely exemplary and used for explaining the present disclosure, and should not be understood as limitation to the present disclosure.

In the specification, unless specified or limited otherwise, relative terms such as "central", "longitudinal", "lateral", "front", "rear", "right", "left", "inner", "outer", "lower", "upper", "horizontal", "vertical", "above", "below", "up", "top", "bottom", "inner", "outer", "clockwise", "anticlockwise" as well as derivative thereof (e.g., "horizontally", "downwardly", "upwardly", etc.) should be construed to refer to the orientation as then described or as shown in the drawings under discussion. These relative terms are for convenience of description and do not require that the present disclosure be constructed or operated in a particular orientation. In addition, terms such as "first" and "second" are used herein for purposes of description and are not intended to indicate or imply relative importance or significance. Thus, features limited by "first" and "second" are intended to indicate or imply including one or more than one these features. In the description of the present disclosure, "a plurality of' relates to two or more than two.

In the present disclosure, unless specified or limited otherwise, the terms "mounted," "connected," "coupled," "fixed" and the like are used broadly, and may be, for example, fixed connections, detachable connections, or integral connections; may also be mechanical or electrical connections; may also be direct connections or indirect connections via intervening structures; may also be inner communications of two elements or interactions of two elements, which can be understood by those skilled in the art according to specific situations.

In the present disclosure, a structure in which a first feature is "on" a second feature may include an embodiment in which the first feature directly contacts the second feature, and may also include an embodiment in which an additional feature is formed between the first feature and the second feature so that the first feature does not directly contact the second feature, unless otherwise specified. Furthermore, a first feature "on," "above," or "on top of' a second feature may include an embodiment in which the first feature is right "on," "above," or "on top of' the second feature, and may also include an embodiment in which the first feature is not right "on," "above," or "on top of' the second feature, or just means that the first feature has a sea level elevation larger than the sea level elevation of the second feature. While first feature "beneath," "below," or "on bottom of' a second feature may include an embodiment in which the first feature is right "beneath," "below," or "on bottom of' the second feature, and may also include an embodiment in which the first feature is not right "beneath," "below," or "on bottom of' the second feature, or just means that the first feature has a sea level elevation smaller than the sea level elevation of the second feature.

The following disclosure provides many different embodiments or examples for implementing different structures of the present disclosure. To simplify the present disclosure, the components and arrangements of the specific examples are described below. Of course, they are merely examples and are not intended to limit the invention. In addition, the present disclosure may repeat the reference numerals and/or letters, which is for the purpose of simplicity and clarity and does not itself indicate the relationship between the various embodiments and/or settings discussed.

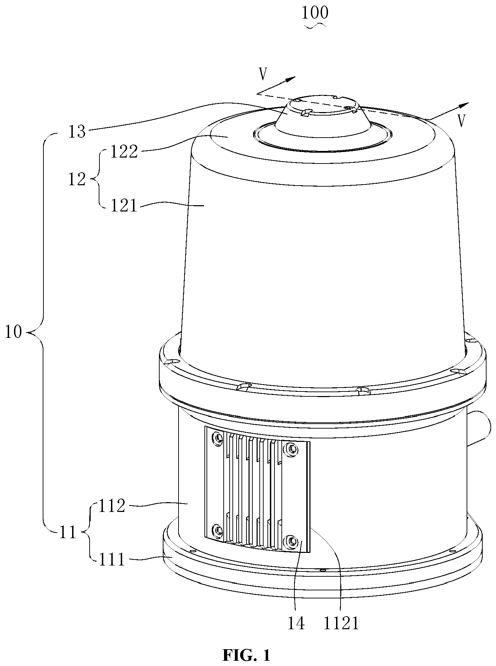

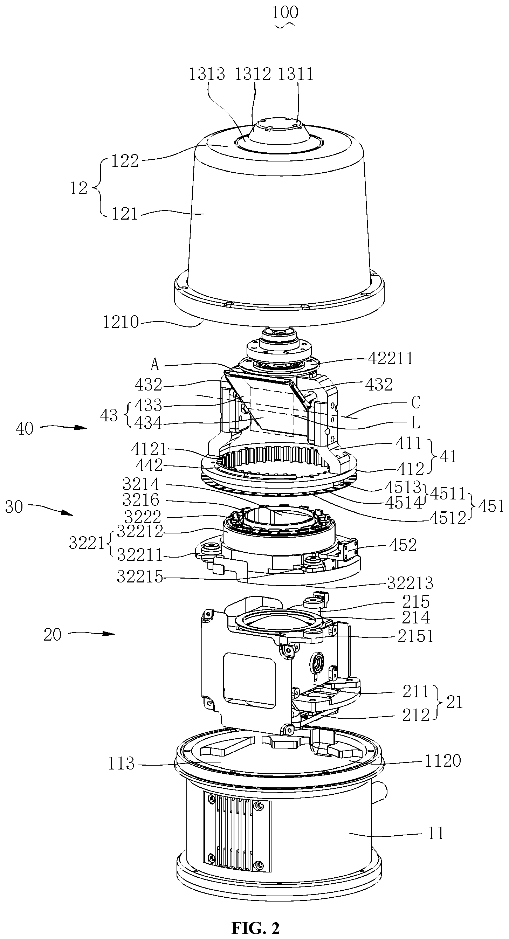

Referring to FIG. 1 and FIG. 2. The present disclosure provides a laser measuring device 100. The laser measuring device 100 includes a light transceiving module 20, a scanning module 30, and a reflection module 40. The light transceiving module 20 may be configured to emit laser pulses and receiving laser pulses reflected by a detection object. The scanning module 30 and the reflection module 40 may be sequentially disposed on a light emitting path of the light transceiving module 20. The scanning module 30 may include a transmissive optical element 31 that may rotate, and the scanning module 30 may be configured to change the transmission direction of the laser pulse passing through the scanning module 30. The reflection module 40 may include a reflective optical element 43 that may rotate, and the reflective optical element 43 may be configured to reflect the laser pulse passing through the reflective optical element 43.

In the laser measuring device 100 of this embodiment, since the transmissive optical element 31 can change the transmission direction of the laser pulse passing through the transmissive optical element 31, and the transmissive optical element 31 can rotate relative to the light transceiving module 20, therefore, the scanning module 30 can increase the measuring range of the laser measuring device 100 (more specifically, the scanning module 30 can increase the angle of view of the laser measuring device 100). Further, since the reflective optical element 43 can change the transmission direction of the laser pulse passing through the reflective optical element 43 and the reflective optical element 43 can rotate relative to the light transceiving module 20, such that the reflected laser pulse may be emitted to the detection object around the laser measuring device 100, and a part of the returned light reflected by the detection object around laser measuring device 100 may also be reflected by the reflective optical element 43 to the light transceiving module 20, therefore, the reflection module 40 may further increase the measuring range of the laser measuring device 100. As such, the distance of all detection objects surrounding the entire laser measuring device 100 (within a range of 360°) may be detected by the laser measuring device 100.

Referring to FIG. 1, FIG. 2, and FIG. 5. The present disclosure further provides another laser measuring device 100. The laser measuring device 100 includes a light transceiving module 20 and a reflection module 40. The light transceiving module 20 may be configured to transmit laser pulses and receive the laser pulses reflected back by the detection object, and the reflection module 40 may be disposed on the light emitting path of the light transceiving module 20. The reflection module 40 may include a reflective optical element 43 that may rotate, and a counterweight component 44 fixed relative to the reflective optical element 43. The reflective optical element 43 may rotate around a rotation axis OO3. The reflective optical element 43 may include a reflective surface 431 facing the light transceiving module 20, and the reflective surface 431 may be inclined with respect to the rotation axis OO3. The weight assembly 44 may be used for weighting the reflective optical element 43 to reduce the centrifugal force couple received by the reflection module 40 when rotating, and the reflective optical element 43 may be used for reflecting the laser pulse passing through the reflective optical element 43.

In the laser measuring device 100 in this embodiment, since the reflective surface 431 of the reflective optical element 43 may be inclined with respect to the rotation axis OO3 of the reflection module 40, the weight assembly 44 may be disposed on the reflection module 40 for weighting the reflective optical element 43, such that the centrifugal force couple applied to the reflection module 40 when the reflective optical element 43 rotates can be reduced, and the smoothness of the reflection module 40 can be improved.

The present disclosure further provides a UAV 200. The UAV 200 may include a body 60 and the laser measuring device 100 of any one of the above embodiments, and the laser measuring device 100 may be disposed on the body 60.

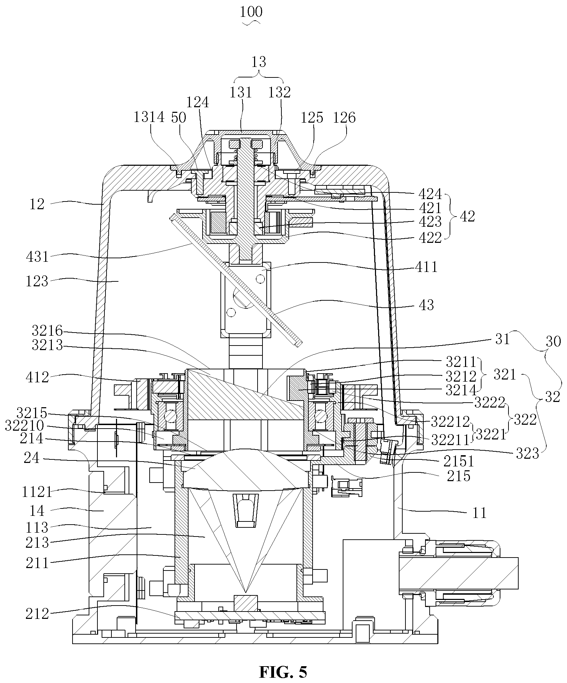

Referring to FIG. 1 and FIG. 2, the laser measuring device 100 according to the embodiments of the present disclosure includes a housing 10, a light transceiving module 20, a scanning module 30, a reflection module 40, and a locking member 50 (as shown in FIG. 5).

The housing 10 may include a base 11, a mask 12, and an end cover 13.

The base 11 may include a bottom plate 111 and an annular shell 112. The shell 112 may be disposed on the bottom plate 111 and jointly define a receiving cavity 113. An end of the shell 112 away from the bottom plate 111 may be surrounded by a shell opening 1120 communicating with the receiving cavity 113. In some embodiments, a through hole 1121 communicating with the receiving cavity 113 and the outside of the shell 112 may be disposed on the shell 112. The laser measuring device 100 may further include a heat dissipation element 14. The heat dissipation element 14 may be disposed in the through hole 1121 and close the through hole 1121.

Referring to FIG. 5, the mask 12 includes an annular side shell 121 and a top wall 122 positioned at one end of the side shell 121. The side shell 121 and the top wall 122 jointly enclose an accommodating cavity 123, and a side shell opening 1210 communicating with the accommodating cavity 123 may be disposed on one end of the side shell 121 away from the top wall 122. The end of the side shell 121 away from the top wall 122 may be disposed at one end of the shell 112 away from the bottom plate 111, and the accommodating cavity 123 may be in communication with the receiving cavity 113. A mounting hole 124, a fixing hole 125, and an annular mounting groove 126 may be disposed on the top wall 122, and the mounting hole 124 and the fixing hole 125 may be all connected to the accommodating cavity 123. There may be a plurality of fixing holes 125, and the plurality of fixing holes 125 may be disposed around the mounting hole 124. The annular mounting groove 126 may surround the mounting hole 124 and the fixing hole 125. The side shell 121 may transmit the laser pulses emitted by the light transceiving module 20 and may not transmit visible light and the laser pulses reflected from the outside of the housing 10. In this embodiment, the mask 12 is an integral structure. In other embodiments, the mask 12 may be assembled from two separate structures, of the side shell 121 and the top wall 122.

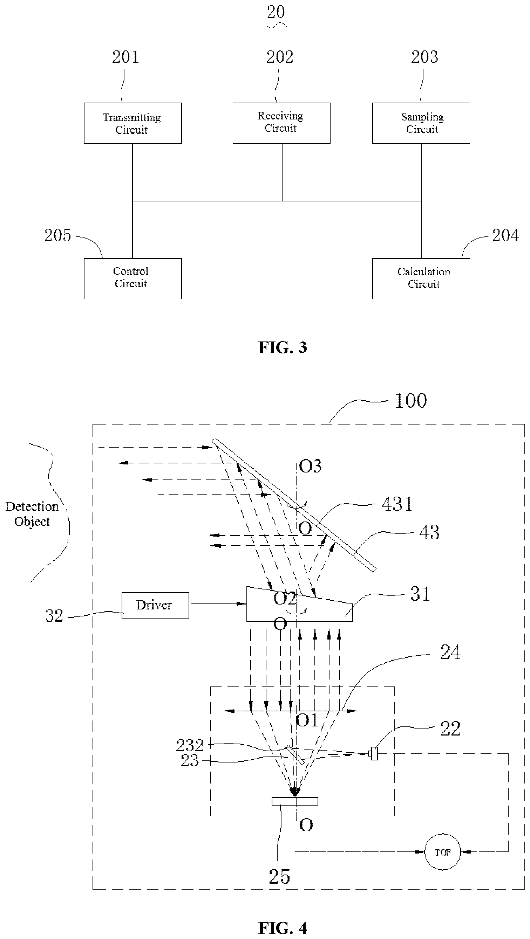

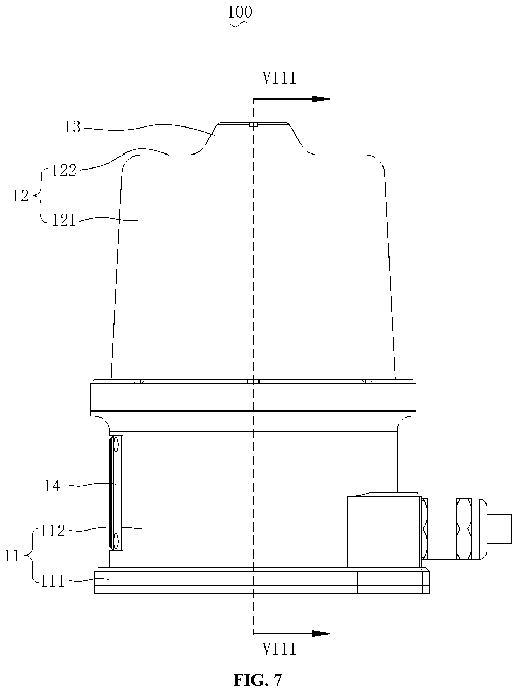

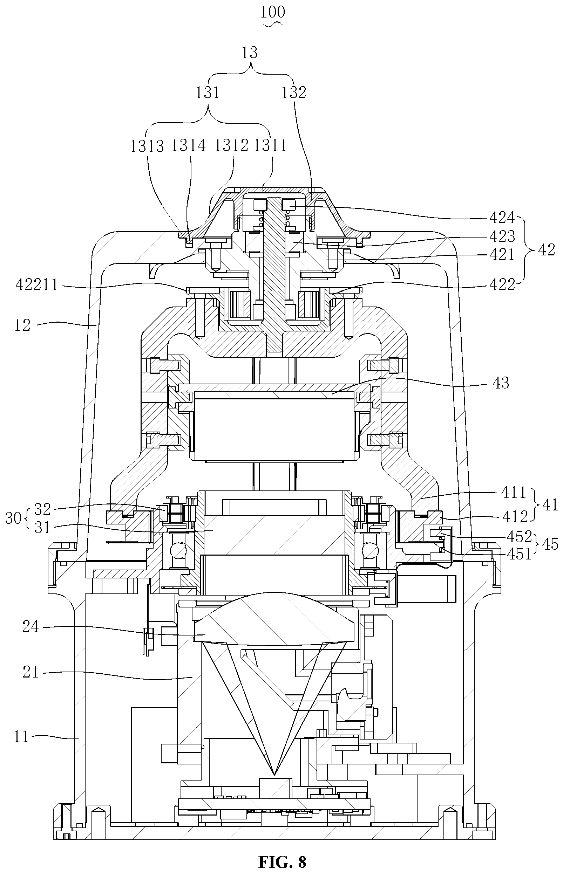

Referring to FIG. 4, FIG. 7, and FIG. 8, the end cover 13 is fixed to the top of the mask 12 in an assembly manner for rotatably connecting the reflection module 40 and the mask 12. In this embodiment, the end cover 13 includes a cover body 131 and a ring-shaped coupling part 132 extending from a surface of the cover body 131. The cover body 131 may be disposed on the top wall 122 and cover the mounting hole 124 and the fixing hole 125. More specifically, the cover body 131 may be substantially in the shape of a hat, including a cover top wall 1311, a cover side wall 1312, an annular cover coupling wall 1313, and an annular cover protrusion 1314. The cover side wall 1312 may extend downwardly from an edge of the cover top wall 1311 toward the side of the cover top wall 1311. The cover coupling wall 1313 may extend radially from an end of the cover side wall 1312 away from the cover top wall 1311. The cover protrusion 1314 may extend from the surface of the cover coupling wall 1313 away from the cover top wall 1311 in a direction away from the cover top wall. The coupling part 132 may extend from the cover top wall 1311, and the ring-shaped coupling part 132 and the cover side wall 1312 may be positioned on the same side of the cover top wall 1311. When the end cover 13 is disposed on the mask 12, the cover coupling wall 1313 may be attached to the top wall 122, and the cover protrusion 1314 may be received in the annular mounting groove 126. In some embodiments, a sealing ring (not shown in FIGs.) may also be disposed in the annular mounting groove 126, and the two ends of the sealing ring may respectively abut against the bottom surface of the annular mounting groove 126 and the cover protrusion 1314. The base 11, the mask 12, and the end cover 13 together may form a closed cavity. In some embodiments, the entire housing 10 may not need to adopt the substantially cylindrical structure shown in the FIGs. of this embodiment, and it may be a polygonal prism structure. Correspondingly, the base 11, the mask 12, the end cover 13, and the parts representing the outline and internal shape may also be correspondingly polygonal structures. For example, the cover top wall 1311, the cover side wall 1312, and the cover coupling wall 1313 of the end cover 13 may all have a corresponding polygonal shape.

Referring to FIG. 3, an embodiment of the present disclosure provides a light transceiving module 20. The light transceiving module 20 may be configured to determine the distance and/or direction of the detection object relative to the light transceiving module 20. The light transceiving module 20 may be an electronic device, such as a laser radar or a laser ranging device. In one embodiment, the light transceiving module 20 may be used to sense external environment information, such as distance information, orientation information, reflection intensity information, speed information, etc. of targets in the environment. In one implementation, the light transceiving module 20 may be configured to detect the distance from the detection object to the light transceiving module 20 by measuring the time of light propagation between the light transceiving module 20 and the detection object, that is, the time-of-fight (TOF). Alternatively, the light transceiving module 20 may be configured to detect the distance from the detection object to the light transceiving module 20 through other technologies, such as a ranging method based on phase shift measurement, or a ranging method based on frequency shift measurement, which is not limited here. The distance and orientation detected by the light transceiving module 20 may be used for remote sensing, obstacle avoidance, surveying and mapping, modeling, navigation, and the like.

For the ease of understanding, the working process of distance measurement will be described as an example in conjunction with the light transceiving module 20 shown in FIG. 3. As shown in FIG. 3, the light transceiving module 20 may include a transmitting circuit 201, a receiving circuit 202, a sampling circuit 203, and a calculation circuit 204.

The transmitting circuit 201 may be configured to emit a light pulse sequence (e.g., a laser pulse sequence). The receiving circuit 202 may be configured to receive the light pulse sequence reflected by the object to be detected and perform photoelectric conversion on the light pulse sequence to obtain an electrical signal. After processing the electronic signal, the electronic signal may be output to the sampling circuit 203. The sampling circuit 203 may be configured to sample the electrical signal to obtain a sampling result. The calculation circuit 204 may be configured to determine the distance between the object to the detected and the light transceiving module 20 based on the sampling result of the sampling circuit 203.

In some embodiments, the light transceiving module 20 may also include a control circuit 205. The control circuit 205 may be configured to control other circuits. For example, the control circuit 205 may be configured to control the working time of each circuit and/or set parameters for each circuit.

It should be understood that although the light transceiving module 20 shown in FIG. 3 includes one transmitting circuit 201, one receiving circuit 202, one sampling circuit 203, and one calculation circuit 204, the embodiments of the present disclosure are not limited thereto. The number of any one of the transmitting circuit 201, the receiving circuit 202, the sampling circuit 203, and the calculation circuit 204 may also be at least two.

The above describes an implementation of the circuit frame of the light transceiving module 20, and some examples of the structure of the light transceiving module 20 will be described below in conjunction with various drawings.

Referring to FIG. 4, the light transceiving module 20 includes a distance measuring housing 21, a light source 22, an optical path changing element 23, a collimating element 24, and a detector 25.

The distance measuring housing 21 may be mounted on the base 11 and received in the receiving cavity 113. In other embodiments, the distance measuring housing 21 may also be mounted on the side shell 121 of the mask 12. The distance measuring housing 21 may include a hollow distance measuring housing side wall 211 and a distance measuring housing bottom wall 212. The distance measuring housing side wall 211 may be disposed on the distance measuring housing bottom wall 212, and the distance measuring housing side wall 211 and the distance measuring housing bottom wall 212 together form a distance measuring housing cavity 213. One end of the distance measuring housing side wall 211 away from the distance measuring housing bottom wall 212 may be enclosed with a distance measuring light passage 214 communicating with the distance measuring housing cavity 213. The distance measuring housing side wall 211 may include a distance measuring mounting seat 215 positioned at an end away from the distance measuring housing bottom wall 212. The distance measuring mounting seat 215 may include a plurality of distance measuring support seats 2151, and the plurality of distance measuring support seats 2151 may be disposed at intervals around the distance measuring light passage 214.

The light source 22 may be disposed on the distance measuring housing 21, and the light source 22 may be configured to emit a laser pulse sequence. In some embodiments, the laser beam emitted by the light source 22 may be a narrow-bandwidth beam with a wavelength outside the visible light range. The light source 22 may be mounted on the distance measuring housing side wall 211, and the laser pulse emitted by the light source 22 may enter the distance measuring housing cavity 213. In some embodiments, the light source 22 may include a laser diode, through which nanosecond laser light can be emitted. For example, the laser pulse emitted by the light source 22 may last for 10 ns. In some embodiments, the light source 22 may include the transmitting circuit 201 shown in FIG. 3.

The collimating element 24 may be disposed on the light path of the light source 22. The collimating element 24 may be configured to collimate the laser beam emitted from the light source 22, that is, to collimate the laser beam emitted from the light source 22 into parallel light. Specifically, the collimating element 24 may be disposed in the distance measuring housing cavity 213 and positioned at one end of the distance measuring housing cavity 213 close to the distance measuring light passage 214. More specifically, the collimating element 24 may be positioned between the light source 22 and the scanning module 30. The laser beam emitted by the light source 22 may be collimated by the collimating element 24, and then emitted from the light transceiving module 20 through the distance measuring light passage 214. An optical axis 001 of the light transceiving module 20 may be parallel to the parallel light and pass through the center of the distance measuring light passage 214. The collimating element 24 may be further configured to condense at least a part of the returned light reflected by the detection object. The collimating element 24 may be a collimating lens or other elements capable of collimating a light beam. In one embodiment, an anti-reflection coating may be plated on the collimating element 24 to increase the intensity of the transmitted light beam.

The optical path changing element 23 may be disposed in the distance measuring housing cavity 213 and positioned on the light path of the light source 22. The optical path changing element 23 may be used for changing the optical path of the laser beam emitted by the light source 22, and for combining the output optical path of the light source 22 and the receiving optical path of the detector 25.

More specifically, the optical path changing element 23 may be positioned between the collimating element 24 and the distance measuring housing bottom wall 212. In other words, the optical path changing element 23 may be positioned on the side of the collimating element 24 opposite to the scanning module 30. The optical path changing element 23 may be a mirror or a half mirror. The optical path changing element 23 may include a distance measuring reflection surface 232, and the light source 22 may be opposite to the distance measuring reflection surface 232. In this embodiment, the optical path changing element 23 is a small reflector, which can change the optical path direction of the laser beam emitted by the light source 22 by 90° or other angles.

The detector 25 may be disposed on the distance measuring housing 21 and received in the distance measuring housing cavity 213. The detector 25 may be positioned at one end of the distance measuring housing cavity 213 away from the scanning module 30, and the detector 25 and the light source 22 may be placed on the same side of the collimating element 24. In some embodiments, the detector 25 may be directly opposite to the collimating element 24, and the detector 25 may be configured to convert at least part of the returned light passing through the collimating element 24 into an electrical signal. In some embodiments, the detector 25 may include the receiving circuit 202, the sampling circuit 203, and the calculation circuit 204 shown in FIG. 3, or may further include the control circuit 205 shown in FIG. 3.

Referring to FIG. 4 and FIG. 5, the scanning module 30 is disposed on the optical path of the light transceiving module 20. In this embodiment, a part of the scanning module 30 is housed in the receiving cavity 113 formed by the base 11, and another part of the scanning module 30 is housed in the accommodating cavity 123 formed by the mask 12. In other embodiments, the scanning module 30 may also be completely received in the receiving cavity 113; or, the scanning module 30 may also be completely received in the accommodating cavity 123. The scanning module 30 may include a transmissive optical element 31 and a scanning driver 32. The scanning driver 32 may include a scanning rotor assembly 321, a scanning state assembly 322, and a scanning bearing 323.

The scanning state assembly 322 may include a hollow scanning housing 3221 and a scanning winding 3222. The scanning housing 3221 can enclose a scanning housing cavity 32210. The scanning housing 3221 may include a scanning mounting base 32211 and a scanning heat dissipation part 32212 connected to each other. The scanning mounting base 32211 may be positioned at one end of the scanning housing 3221 close to the light transceiving module 20. The scanning mounting base 32211 may be mounted on the distance measuring mounting seat 215. More specifically, the scanning mounting base 32211 may include a plurality of scanning support bases 32215 corresponding to the plurality of distance measuring support seats 2151, and the plurality of scanning support bases 32215 and the corresponding distance measuring support seats 2151 may be connected together by a connector. The outer peripheral surface of the scanning heat dissipation part 32212 may be a circumferential surface. The scanning winding 3222 may be mounted in the scanning heat dissipation part 32212.

The scanning rotor assembly 321 may include an annular scanning yoke 3211 and an annular scanning magnet 3212. The scanning yoke 3211 may pass through the scanning housing 3221 and the scanning winding 3222. A receiving cavity 3213 may be formed around the scanning yoke 3211, and one end of the scanning yoke 3211 corresponding to the scanning mounting base 32211 may enclose a first light passage 3215 communicating with the receiving cavity 3213. One end of the scanning yoke 3211 corresponding to the scanning heat dissipation part 32212 may enclose a second light passage 3216 communicating with the receiving cavity 3213. The receiving cavity 3213 may communicate with the distance measuring light passage 214 of the distance measuring housing cavity 213 through the first light passage 3215. The scanning magnet 3212 may be sleeved outside the scanning yoke 3211 and received in the scanning winding 3222. The scanning magnet 3212 and the scanning winding 3222 may be opposite and space apart. The scanning state assembly 322 may be used to drive the scanning rotor assembly 321 to rotate around a central axis OO2 of the scanning yoke 3211. In this embodiment, the central axis OO2 of the scanning yoke 3211 is parallel to the optical axis 001 of the light transceiving module 20. In some embodiments, the central axis OO2 of the scanning yoke 3211 may coincide with the optical axis 001 of the light transceiving module 20.

The scanning bearing 323 may be sleeved outside the scanning yoke 3211 and received in the scanning housing 3221. More specifically, the scanning bearing 323 may be disposed between the scanning yoke 3211 and the scanning housing 3221, and used to restrict the scanning yoke 3211 from rotating about the central axis OO2. In the direction of the axis OO2 of the scanning yoke 3211, the scanning bearing 323 may be spaced from the scanning yoke 3211.

The transmissive optical element 31 may be disposed in the receiving cavity 3213 and positioned on the optical path of the light transceiving module 20. More specifically, the light emitted by the light transceiving module 20 may be projected from the first light passage 3215 to the transmissive optical element 31, and exit the scanning module 30 from the second light passage 3216. The scanning driver 32 may be used to drive the transmissive optical element 31 to rotate to change the transmission direction of the laser pulse passing through the transmissive optical element 31. The transmissive optical element 31 may be a lens, a mirror, a prism, a grating, an optical phased array, or any combination of the foregoing optical elements. The transmissive optical element 31 of this embodiment is a prism 31, and the prism 31 is a wedge-shaped body. More specifically, the prism 31 is substantially cylindrical. The bottom surface of the prism 31 may be perpendicular to the axis of the prism 31, the top surface of the prism 31 and the axis of the prism 31 may be relatively inclined, and the thickness of the prism 31 may be uneven.

In other embodiments, the scanning rotor assembly 321 may further include a protrusion 3214. The protrusion 3214 may be disposed on the inner wall of the scanning yoke 3211 and used to weight the prism 31 to reduce the shaking of the scanning rotor assembly 321 when it rotates. Specially, the protrusion 3214 may be disposed on the inner wall of the scanning yoke 3211 that is directly opposite to the top surface of the prism 31. More specifically, the center of the protrusion 3214 may be disposed on the inner wall of the scanning yoke 3211 corresponding to the place where the thickness of the prism 31 is the thinnest.

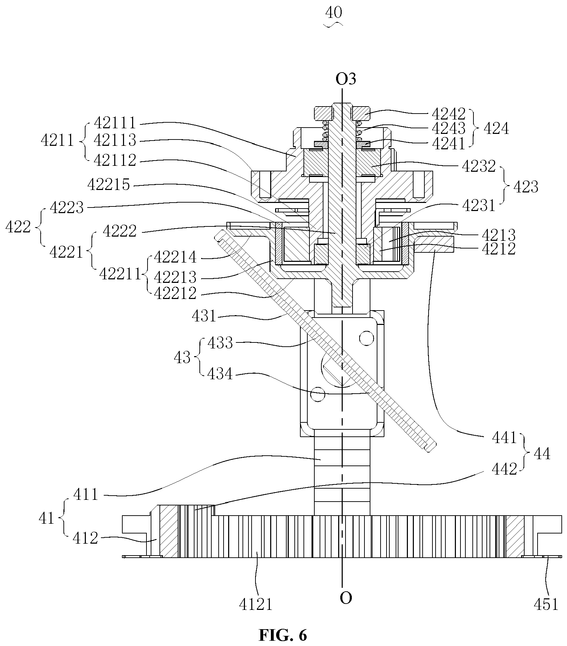

Referring to FIG. 6, FIG. 7, and FIG. 8, the reflection module 40 is disposed on the light emitting path of the light transceiving module 20. In this embodiment, the scanning module 30 and the reflection module 40 are sequentially disposed on the light emitting path of the light transceiving module 20. The laser pulse emitted by the light transceiving module 20 may be transmitted to the reflection module 40 after passing through the transmissive optical element 31, and the reflection module 40 may be used to reflect the laser pulse passing through the reflection module 40. The reflection module 40 may be received in the accommodating cavity 123 formed by the mask 12 and rotatably connected to the housing 10. The reflection module 40 may include a mounting frame 41, a reflection driver 42, a reflective optical element 43, a weight assembly 44, and a detector 45.

The reflection driver 42 may include a reflective stator assembly 421, a reflective rotor assembly 422, a reflective positioning assembly 423, and a reflective fixing assembly 424. The reflection driver 42 may be used to drive the reflective rotor assembly 422 to rotate around the rotation axis OO3. The rotation axis OO3 of this embodiment is parallel to the optical axis 001 of the light transceiving module 20. In some embodiments, the rotation axis OO3 may coincide with the optical axis 001 of the light transceiving module 20.

The reflective stator assembly 421 may include a sleeve 4211, a winding body 4212, and a reflective winding 4213.

The sleeve 4211 may have a hollow cylindrical structure. The sleeve 4211 may include a fixing end 42111, a mounting end 42112, and a mounting platform 42113. The fixing end 42111 and the mounting end 42112 may be positioned at opposite ends of the sleeve 4211. The mounting platform 42113 may be formed extending from the outer peripheral surface of the fixing end 42111, and the mounting platform 42113 may surround the fixing end 42111. The sleeve 4211 may be fixed to the mask 12 by a single end. More specifically, a plurality of locking members 50 may be respectively inserted in the corresponding fixing holes 125 and combined with the mounting platform 42113 to mount the sleeve 4211 on the top wall 122 of the mask 12. The mounting end 42112 may be a free end (suspended arranged). After the sleeve 4211 is mounted on the mask 12, the end cover 13 may be mounted on the mask 12, and the coupling part 132 may be coupled with the fixing end 42111.

The winding body 4212 may be sleeved on the mounting end 42112. The reflective winding 4213 may be disposed on the winding body 4212.

The reflective rotor assembly 422 may include a rotor 4221 and a magnet 4223. The rotor 4221 may include a rotor cover 42211 and a rotating shaft 4222. The rotating shaft 4222 may pass through the sleeve 4211 and can rotate relative to the sleeve 4211. The end of the rotating shaft 4222 away from the mounting end 42112 may protrude from the mounting hole 124 to the outside of the mask 12, and may be received in the coupling part 132. The axis of the rotating shaft 4222 may coincide with the rotation axis OO3.

The rotor cover 42211 may include a bottom wall 42212, an annular side wall 42213, and an annular mounting plate 42214. The bottom wall 42212 may extend from the outer peripheral surface of the rotating shaft 4222 close to the mounting end 42112. The side wall 42213 may extend from the bottom wall 42212 toward to the side where the mounting end 42112 is positioned, and the side wall 42213 and the bottom wall 42212 may enclose a receiving space 42215. In other words, the rotating shaft 4222 may extend from the bottom wall 42212 toward the receiving space 42215 and pass through the sleeve 4211. The winding body 4212 and the reflective winding 4213 may be received in the receiving space 42215. The mounting plate 42214 may extend from one end of the side wall 42213 away from the bottom wall 42212 toward a direction away from the receiving space 42215.

The magnet 4223 may be received in the receiving space 42215, and spaced and opposed to the winding body 4212. The magnet 4223 may be fixed on the side wall 42213 of the rotor cover 42211 and can follow the rotor 4221 to rotate around the rotation axis OO3.

The reflective positioning assembly 423 may be used to restrict the reflective rotor assembly 422 from rotating around the fixed rotation axis OO3. The reflective positioning assembly 423 may include a first bearing 4231 and a second bearing 4232. The first bearing 4231 may be sleeved on the rotating shaft 4222 and positioned between the inner surface of the sleeve 4211 and the rotating shaft 4222, and the first bearing 4231 may be positioned at the mounting end 42112. The second bearing 4232 may be sleeved on the rotating shaft 4222 and positioned between the inner surface of the sleeve 4211 and the rotating shaft 4222, and the second bearing 4232 may be positioned at the fixing end 42111. The first bearing 4231 and the second bearing 4232 may be configured to restrict the rotation of the rotating shaft 4222 around the rotation axis OO3.

The reflective fixing assembly 424 may be used to fix the reflective positioning assembly 423. The reflective fixing assembly 424 may include a shaft sleeve 4241, a fastener 4242, and an elastic member 4243. The shaft sleeve 4241 may be sleeved on the rotating shaft 4222 and abut the end of the second bearing 4232 away from the first bearing 4231. The fastener 4242 may be mounted on the end of the rotating shaft 4222 away from the rotor cover 42211. The elastic member 4243 may be sleeved on the rotating shaft 4222, and both ends of the elastic member 4243 may be respectively against the shaft sleeve 4241 and the fastener 4242. The fastener 4242 may press the shaft sleeve 4241 against the second bearing 4232 through the elastic member 4243 to fix the second bearing 4232 on the rotating shaft 4222 and the sleeve 4211.

The mounting frame 41 (refer to FIG. 2) may be mounted on the rotor 4221 and can follow the rotor 4221 to rotate around the rotation axis OO3. In other embodiments, the mounting frame 41 and the rotor 4221 may also be an integral structure. The mounting frame 41 may include two connecting arms 411 and a connecting ring 412 mounted on the mounting plate 42214 at intervals. One end of each connecting arm 411 may be connected to the connecting ring 412, and the other end of each connecting arm 411 may extend toward the side close to the light transceiving module 20. The connecting ring 412 may be connected to one end of the two connecting arms 411 away from the mounting plate 42214 and positioned between the two connecting arms 411. The two connecting arms 411 may be symmetrical about the axis of the connecting ring 412, and the axis of the connecting ring 412 may coincide with the rotation axis OO3. The connecting ring 412 of this embodiment has an annular shape, the inner wall of the connecting ring 412 is formed with a plurality of heat dissipation teeth 4121 disposed at intervals, and the heat dissipation teeth 4121 extend along the axial direction of the connecting ring 412. The connecting ring 412 may be sleeved outside the scanning heat dissipation part 32212 and can rotate relative to the scanning heat dissipation part 32212, and the heat dissipation teeth 4121 may be spaced from the outer surface of the scanning heat dissipation part 32212. The connecting ring 412 may be suspended relative to the scanning heat dissipation part 32212 and the housing 10 as a free end. When the connecting ring 412 rotates relative to the scanning heat dissipation part 32212, the heat dissipation teeth 4121 may disturb the air between the inner wall of the connecting ring 412 and the outer peripheral surface of the scanning heat dissipation part 32212 to dissipate heat to the scanning heat dissipation part 32212.

The reflective optical element 43 may be mounted on mounting frame 41 and positioned on the light emitting path of the light transceiving module 20, and the reflective optical element 43 may follow the mounting frame 41 to rotate around the rotation axis OO3. The reflective optical element 43 may be used for projecting the laser pulses emitted by the light transceiving module 20 from the side shell 121 of the mask 12 to a detection object positioned outside the housing 10. The reflective optical element 43 may be positioned between the connecting ring 412 and the mounting plate 42214, and the reflective optical element 43 may be inclined with respect to the rotation axis OO3. More specifically, the reflective optical element 43 of this embodiment has a rectangular sheet shape, and the reflective optical element 43 includes a reflective surface 431 and two side surfaces 432. The reflective surface 431 may face the light transceiving module 20, and the reflective surface 431 may be inclined relative to the rotation axis OO3. The two side surfaces 432 may be connected to the reflective surface 431, and respectively positioned on opposite sides of the reflective surface 431, and the two side surfaces 432 may be respectively mounted on the two connecting arms 411.

Referring to FIG. 2, the reflective optical element 43 includes a central axis C passing through the two side surfaces 432, and a plane parallel to the central axis C of the reflective optical element 43 and including the rotation axis OO3 as an auxiliary plane A. The auxiliary plane A and the reflective optical element 43 may intersect to form a virtual intersection line L. The connecting line between the two side surfaces 432 and the two connection points of the two connecting arms 411 in this embodiment coincides with the virtual intersection line L, which is also perpendicular to the rotation axis OO3. The virtual intersection line L may divide the reflective optical element 43 into a first segment 433 and a second segment 434 that are connected, and the second segment 434 may be closer to the scanning module 30 than the first segment 433. The length of the first segment 433 in this embodiment is greater than the length of the second segment 434. In other embodiments, the length of the first segment 433 may also be equal to or less than the length of the second segment 434.

Referring to FIG. 2 and FIG. 5, the weight assembly 44 may be disposed on the reflective rotor assembly 422 and used to weight the reflective optical element 43 to reduce the centrifugal force couple that the reflection module 40 receives when rotating. The weight assembly 44 may include a weight projection 441 and a weight boss 442. The weight projection 441 may be disposed on the mounting plate 42214, and the weight boss 442 may be disposed on the connecting ring 412. More specifically, the weight projection 441 and the weight boss 442 may be respective positioned on opposite sides of the auxiliary plane A, the weight projection 441 may be positioned on the side opposite to the first segment 433 of the auxiliary plane A, and the weight boss 442 may be positioned on the side of the auxiliary plane A opposite to the second segment 434. The weight projection 441 may be used to weight the reflective optical element 43 at the end of the first segment 433, and the weight boss 442 may be used to weight the reflective optical element 43 at the end of the second segment 434. The weight projection 441 and the mounting plate 42214 may be an integral structure. Alternatively, the weight projection 441 and the mounting plate 42214 may be two separate structures, and the weight projection 441 may be mounted on the mounting plate 42214 by one or more of may be screwing, gluing, welding, and clamping. The weight boss 442 and the connecting ring 412 may be an integral structure. Alternatively, the weight boss 442 and the connecting ring 412 may be two separate structures, and the weight boss 442 may be mounted on the connecting ring 412 by one or more of may be screwing, gluing, welding, and clamping.

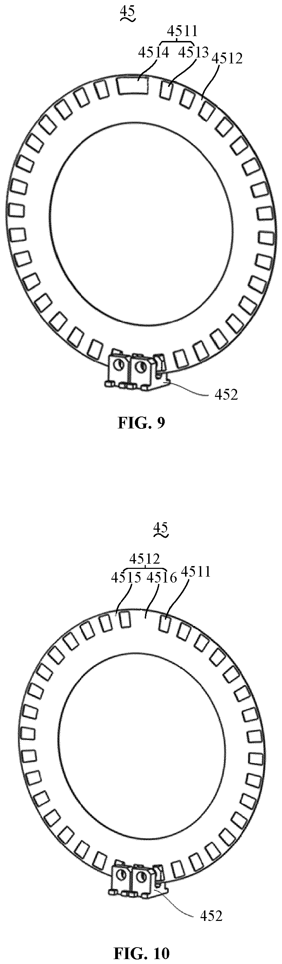

Referring to FIG. 2 and FIG. 9, the detector 45 includes a code disc 451 and at least one optical switch 452. The code disc 451 may be disposed at one end of the connecting ring 412 close to the scanning module 30, and the code disc 451 may follow the scanning module 30 to rotate around the rotation axis OO3. The at least one optical switch 452 may be disposed on the scanning mounting base 32211. The code disc 451 may cooperate with the at least one optical switch 452 and may be used together to detect the rotation parameter of the reflective optical element 43.

Referring to FIG. 9, in one embodiment, a plurality of light-transmissive areas 4511 and plurality of non-light-transmissive areas 4512 are alternately distributed along the same circumference of the code disc 451. The plurality of light-transmissive areas 4511 may include a plurality of first light-transmissive areas 4513 with the same width, and a second light-transmissive area 4514 having a width different from that of the first light-transmissive area 4513. The widths of the plurality of non-light-transmissive areas 4512 may be the same, where the width may be the circumferential width along the circumference. At this time, the number of the optical switch 452 may be one or two.

The optical switch 452 may include a transmitting tube (not shown in FIG. 9) and a receiving tube (not shown in FIG. 9). The transmitting tube and the receiving tube may be positioned on opposite sides of the code disc 451, and the transmitting tube and the receiving tube may be positioned on the circumference where the light-transmissive areas 4511 and the non-light-transmissive areas 4512 are positioned. The laser light emitted by the transmitting tube may be transmitted to the receiving tube through the light-transmissive areas 4511, and the non-light-transmissive areas 4512 may shield the light emitting tube from emitting laser light to the receiving tube.

When the mounting frame 41 drives the code disc 451 to rotate, the optical switch 452 may be stationary, and the transmitting tube of the optical switch 452 may emit an optical signal. When the light-transmissive areas 4511 reach the positions aligned with the transmitting tube and the receiving tube, the receiving tube may receive the optical signal emitted by the transmitting tube. When the light-transmissive areas 4511 do not reach the positions aligned with the transmitting tube and the receiving tube, that is, when the non-light-transmissive areas 4512 are aligned with the transmitting tube and the receiving tube, the receiving tube may not receive the optical signal emitted by the transmitting tube. Therefore, when the light-transmissive areas 4511 and the non-light-transmissive areas 4512 of the code disc 451 are rotated to the positioned aligned with the optical switch 452, the optical switch 452 may output signals of different levels, respectively. In some embodiments, when the light-transmissive areas 4511 of the code disc 451 rotate to the position aligned with the optical switch 452, and the optical switch 452 may output a high level. Correspondingly, when the non-light-transmissive areas 4512 of the code disc 451 rotates to the position aligned with the optical switch 452, the optical switch 452 may output a low level. In some embodiments, the optical switch 452 may output the low level when the light-transmissive areas 4511 of the code disc 451 rotate to the position aligned with the optical switch 452, and the optical switch 452 may output the high level when the non-light-transmissive areas 4512 of the code disc 451 rotates to the position aligned with the optical switch 452.

In some embodiments, the number of the optical switch 452 may be one. In this embodiment, after the mounting frame 41 drives the code disc 451 to rotate, when the light-transmissive areas 4511 of the code disc 451 rotate to the position aligned with the optical switch 452, the optical switch 452 can output a high level; and when the non-light-transmissive areas 4512 of the code disc 451 rotates to the position aligned with the optical switch 452, the optical switch 452 can output a low level. There may be a zero position (e.g., a central axis, an edge, etc.) every time the code disc 451 completes a rotation. Correspondingly, every time the code disc 451 completes a rotation, since the width of the second light-transmissive area 4514 is different from the width of the first light-transmissive area 4513, therefore, in the pulse sequence output by the optical switch 452, the pulse corresponding to the second light-transmissive area 4514 may be different from the pulse corresponding to the first light-transmissive area 4513, thereby marking the zero position of the code disc 451. In some examples, when the mounting frame 41 drives the code disc 451 to rotate at a constant speed, since the length of the high level (e.g., the length of the high level or the count) output by the optical switch 452 when the second light-transmissive area 4514 rotates to the position aligned with the optical switch 452 may be longer than the length of the high level output by the optical switch 452 when the first light-transmissive area 4513 rotates to the position aligned with the optical switch 452, therefore, a processor may be configured to determine the length of the high level, and use the rising or falling edge, or the middle position corresponding to the longer high level as the zero position of the code disc 451. It should be noted that, in the embodiments of the present disclosure, the use of the optical switch 452 may only be used to detect the zero position of the 41 rotating at a constant speed. This is because the length of the pulse sequence detected by the optical switch 452 is related to the rotation speed of the code disc 451, and the rotation speed of the code disc 451 is determined by the rotation speed of the mounting frame 41. When the mounting frame 41 rotates at a variable speed, the length of the pulse corresponding to the first light-transmissive area 4513 and the second light-transmissive area 4514 detected by the optical switch 452 may be uncertain, such that the zero position of the code disc 451 cannot be determined.

In some embodiments, the number of the optical switch 452 may be two. The zero position information of the code disc 451 and the relative rotation position of the code disc 451 may be determined by the pulse sequence output by the two optical switches 452, thereby obtaining the absolute position of the mounting frame 41. It should be noted that, in the embodiments of the present disclosure, the use of two optical switches 452 is not only suitable for zero position detection of the mounting frame 41 rotating at a constant speed, but also suitable for zero position detection of the mounting frame 41 rotating at a variable speed. This is because the pulse sequence detected by the two optical switches 452 can be processed to obtain a unique zero position pulse, thereby uniquely determining the zero position of the mounting frame 41 (and the code disc 451). The rotation angle of the mounting frame 41 relative to the zero position at a specific time may be based on the number of the light-transmissive areas 4511, the number of complete signal cycles detected by the optical switch 452 in the time interval between the specific time and the last zero detection, and the angle of rotation of the code disc 451 in the time interval between the specific time and the last time the optical switch 452 detects the rising or falling edge of the high level before the specific time. In some embodiments, a complete signal cycle may be the duration between the rising edge and the falling edge of the pulse corresponding to two adjacent first light-transmissive areas 4513 on the code disc 451. Alternatively, a complete signal cycle may also be the duration between the falling edges of the pulse corresponding to two adjacent non-light-transmissive areas 4512 on the code disc 451. Within the time interval between the specific time and the last time the optical switch 452 detects the rising or falling edge of the high level, the angle of rotation of the code disc 451 may be calculated based on the rotation speed of the code disc 451 and the time interval between the specific time and the last time the optical switch 452 detects the rising or falling edge of the high level.

Referring to FIG. 10, in another embodiment, the plurality of light-transmissive areas 4511 have the same width. The plurality of non-light-transmissive areas 4512 include a plurality of first non-light-transmissive areas 4515 with the same width and a second non-light-transmissive area 4516 with a width different from the width of the non-light-transmissive area 4515. In some embodiments, the width may be the circumferential width along the circumference. At this time, the number of the optical switch 452 may be one or two. The optical switch 452 may detect the zero position of the code disc 451 based on the second non-light-transmissive area 4516.

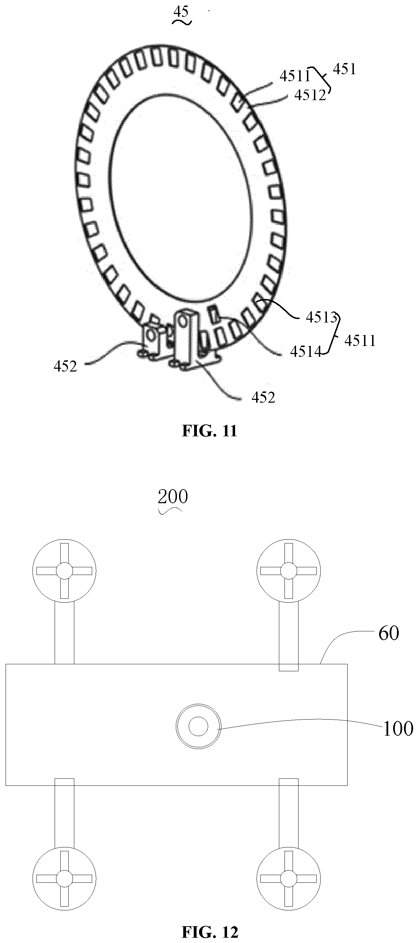

Referring to FIG. 11, in other embodiment, the code disc 451 includes a plurality of light-transmissive areas 4511 and a plurality of non-light-transmissive areas 4512. The light-transmissive area 4511 includes a first light-transmissive area 4513 and a second light-transmissive area 4514. The plurality of first light-transmissive areas 4513 and the plurality of non-light-transmissive areas 4512 may be alternately disposed along a circle, and the second light-transmissive areas 4514 may not be positioned on the circle. The widths of the plurality of first light-transmissive areas 4513 may be the same, and the widths of the plurality of non-light-transmissive areas 4512 may be the same, where the width may be the circumferential width along the circumference. At this time, the number of the optical switch 452 may be two. The transmitting tube and the receiving of one optical switch 452 may be positioned on the circumference where the first light-transmissive area 4513 is positioned, and the transmitting tube and the receiving of the other optical switch 452 may be positioned on the circumference where the second light-transmissive area 4514 is positioned, and used to detect the zero position of the code disc 451.

Referring to FIG. 4 and FIG. 5, when the laser measuring device 100 is working, the light source 22 emits a laser pulse, and the laser pulse can be collimated by the collimating element 24 after changing the direction of the optical path through the optical path changing element 23 (which can be change by 90° or changed to other angles). The collimated laser pulse can be projected on the reflective optical element 43 by the prism 31 to change the transmission direction, and the reflective optical element 43 may reflect the laser pulse whose transmission direction is changed by the prism 31. The reflected laser pulse may pass through the side shell 121 to the detection object. The laser pulse (the returned light) reflected by the detection object may pass through the side shell 121, and it may be reflected by the reflective optical element 43 before being transmitted to the prism 31. After passing through the prism 31, at least part of the returned light may be condensed by the collimating device 24 to the detector 25. The detector 25 may convert at least part of the returned light passing through the collimating element 24 into an electrical signal pulse, and the laser measuring device 100 can determine the laser pulse receiving time based on the rising edge time and/or the falling edge time of the electrical signal pulse. In this way, the laser measuring device 100 can calculate the flight time by using the pulse receiving time information and the pulse sending time information, thereby determining the distance from the detection object to the laser measuring device 100.

Since the prism 31 can change the laser pulse passing through the prism 31, and the prism 31 can rotate relative to the light transceiving module 20, therefore, the scanning module 30 may increase the measurement range of the laser measuring device 100 (more specifically, the scanning module 30 may increase the angle of view of the laser measuring device 100). Further, since the reflective optical element 43 can change the transmission direction of the laser pulse passing through the reflective optical element 43, and the reflective optical element 43 can rotate relative to the light transceiving module 20, the reflected laser pulse may be emitted to the detection object around the side shell 121 once, and part of the returned light reflected by the detection object surrounding the side shell 121 may also be reflected by the reflective optical element 43 to the detector 45 at the same time. Therefore, the reflection module 40 can further increase the measurement range of the laser measuring device 100, such that the distance of all detection objects surrounding the entire side shell 121 (within the range of 360°) may be detected by the laser measuring device 100. In addition, since the side shell 121 can transmit the laser pulses emitted by the light transceiving module 20 without transmitting visible light, the user will not see the internal structure of the laser measuring device 100 without affecting the transmission and receiving of the laser, the aesthetic of the laser measuring device 100 is improved.

Since the scanning module 30 and the reflection module 40 can increase the measurement range of the light transceiving module 20, the laser measuring device 100 of the present disclosure may be configured by sequentially disposing the scanning module 30 and the reflection module 40 on the optical path of the light transceiving module 20 to increase the measurement range of the laser measuring device 100.

Further, in the present disclosure, the weight assembly 44 is disposed on the reflection module 40, thereby reducing the force couple applied to the reflection module 40 when the reflective optical element 43 rotates, and improving the smoothness of the reflection module 40. In the embodiments of the present disclosure, the weight assembly 44 also includes the weight projection 441 and the weight boss 442. In other embodiments, the weight assembly 44 may include any one of the weight projection 441 and the weight boss 442, which can be specifically determined by the tilt angle and the mounting position of the reflective optical element 43 in the laser measuring device 100.

Referring to FIG. 12, the UAV 200 of the present disclosure includes a body 60 and the laser measuring device 100 of the above embodiments, and the laser measuring device 100 is mounted on the body 60.

The laser measuring device 100 on the UAV 200 of the present disclosure uses the scanning module 30 and the reflection module 40 to increase the measurement range of the distance of the detection object. As such, the UAV 200 can detect the distance of the detection objects in a bigger range, and can be widely used in scenes such as aerial photography, obstacle avoidance, flying around, and detection.

In the present description, descriptions of reference terms such as "an embodiment," "some embodiments," "illustrative embodiment," "example," "specific example," or "some examples," mean that characteristics, structures, materials, or features described in relation to the embodiment or example are included in at least one embodiment or example of the present disclosure. In the present description, illustrative expression of the above terms does not necessarily mean the same embodiment or example. Further, specific characteristics, structures, materials, or features may be combined in one or multiple embodiments or examples in a suitable manner.

The above descriptions of various embodiments of the present disclosure are illustrative, and do not limit the scope of the present disclosure. A person having ordinary skills in the art can make changes, modifications, substitutions, and variations based on the present disclosure. The scope of the present disclosure is defined by the following claims and the equivalents.

## Claims

1. A laser measuring device, comprising:
a light transceiving module configured to emit laser pulses and receive laser pulses reflected by a detection object;
a scanning module including a rotatable transmissive optical element, the scanning module being configured to change a transmission direction of the laser pulse passing through the scanning module; and
a reflection module including a rotatable reflective optical element, the reflective optical element being configured to reflect the laser pulse passing through the reflective optical element, wherein
the scanning module and the reflection module are sequentially disposed on a light exiting path of the light transceiving module.

2. The laser measuring device of claim 1, further comprising:
a housing, wherein the light transceiving module, the scanning module, and the reflection module are all disposed in the housing, one end of the reflection module is rotatably fixed on the housing, and the other end is a free end.

3. The laser measuring device of claim 1, further comprising:
a housing, the light transceiving module, the scanning module, and the reflection module all being disposed in the housing, wherein the reflection module includes
a mounting frame, the reflective optical element being mounted on the mounting frame and positioned on the lighting exiting path; and
a reflection driver, the reflection driver being mounted on the housing and configured to drive the mounting frame to rotate relative to the housing to drive the reflective optical element to rotate around a rotation axis.

4. The laser measuring device of claim 3, wherein:
the rotation axis is parallel to an optical axis of the light transceiving module.

5. The laser measuring device of claim 3, wherein:
the rotation axis coincides with the optical axis of the light transceiving module.

6. The laser measuring device of claim 3, wherein:
the reflective optical element is inclined with respect to the rotation axis.

7. The laser measuring device of claim 3, wherein:
a plane parallel to a central axis of the reflective optical element and including rotation axis is defined as an auxiliary plane, the auxiliary plane intersecting the reflective optical element to form a virtual line of intersection, the virtual line of intersection dividing the reflective optical element into a first segment connected a second segment, the second segment being closer to the scanning module than the first segment, and a length of the first segment being greater than a length of the second segment.

8. The laser measuring device of claim 3, wherein reflection driver includes:
a reflective stator assembly, the reflective stator assembly being mounted on the housing; and
a reflective rotor assembly rotating around the rotation axis, the reflective stator assembly being used to drive the reflective rotor assembly to rotate around the rotation axis.

9. The laser measuring device of claim 8, wherein:
the reflection module further includes a weight assembly, the weight assembly being disposed on the reflective rotor component and configured to weight the reflective optical element to reduce a centrifugal force couple received by the reflection module during rotation.

10. The laser measuring device of claim 9, wherein the reflective stator assembly includes:
a sleeve, the sleeve including a fixing end and a mounting end opposed to each other, the fixing end being fixed on the housing;
a winding body, the winding body being sleeved on the mounting end; and
a reflective winding mounted on the winding body.

11. The laser measuring device of claim 10, wherein the reflective rotor assembly includes:
a rotor, the rotor including a rotor cover and a rotating shaft, the rotor cover including a bottom wall and an annular side wall extending from the bottom wall, the side wall and the bottom wall enclosing a receiving space, the rotating shaft extending from the bottom wall into the receiving space and passing through the sleeve, the winding body and the reflective winding being received in the receiving space; and
a magnet, the magnet being received in the receiving space and positioned opposite to the reflective winding body.

12. The laser measuring device of claim 11, wherein the reflection driver further includes:
a reflective positioning assembly positioned between the reflective stator assembly and the reflective rotor assembly, the reflective positioning assembly being used to restrict the reflective rotor assembly from rotating around the fixed rotating shaft; and
the reflective rotor assembly includes:
a first bearing positioned in the mounting end, the first bearing being sleeved on the rotating shaft and positioned between an inner surface of the sleeve and the rotating shaft, and
a second bearing, the second bearing positioned in the fixing end, the second bearing being sleeved on the rotating shaft and positioned between the inner surface of the sleeve and the rotating shaft.

13. The laser measuring device of claim 12, wherein the reflection driver further includes:
a reflective fixing assembly, the reflective fixing assembly including a shaft sleeve, the shaft sleeve being sleeved on the rotating shaft and abutting against an end of the second bearing away from the first bearing; and
a fastener, the fastener being mounted on an end of the rotating shaft away from the rotor cover and abutting against the shaft sleeve on the second bearing.

14. The laser measuring device of claim 13, wherein the reflective fixing assembly includes:
an elastic member, the elastic member being sleeve on the rotating shaft, and two ends of the elastic member being respectively abutting against the shaft sleeve and the fastener.

15. The laser measuring device of claim 11, wherein:
the reflective rotor assembly further includes a mounting plate extending from an outer surface of the side wall; and
the weight assembly includes a weight projection, the weight projection being disposed on the mounting plate.

16. The laser measuring device of claim 11, wherein the reflective rotor assembly further includes a mounting plate extending from an outer surface of the side wall, the mounting frame includes:
two connecting arms mounted on the mounting plate at intervals, one end of each connecting arm being connected to the mounting plate, the other end of each connecting arm extending toward a side close to the light transceiving module, and the reflective optical element being positioned between the two connecting arms; and
a connecting ring, the connecting ring being connected to the other ends of the two connecting arms and disposed between the two connecting arms.

17. The laser measuring device of claim 16, wherein:
the two connecting arms are symmetrical about an axis of the connecting ring, and the axis of the connecting ring coincides with the rotation axis.

18. The laser measuring device of claim 16, wherein the reflective optical element includes:
a reflective surface facing the light transceiving module, the reflective surface being relatively inclined with respect to the rotation axis; and
two side surfaces, each of the side surfaces being connected with the reflective surface, and the two side surfaces being respectively mounted on the two connecting arms.

19. The laser measuring device of claim 16, wherein:
the weight assembly further a weight boss, the weight boss being disposed on the connecting ring.

20. The laser measuring device of claim 3, wherein:
the reflection driver includes a mounting plate, the mounting frame including two connecting arms mounted on the mounting plate at intervals and a connecting ring disposed between the two connecting arms, the connecting ring and the mounting plate being positioned at opposite ends of the connecting arm, and the reflective optical element being positioned between the connecting ring and the mounting plate; and
the reflection module further includes a weight assembly, the weight assembly including a weight projection and a weight boss, the weight projection being mounted on the mounting plate, and the weight boss being disposed on the connecting ring.

21. The laser measuring device of claim 20, wherein:
a plane parallel to a central axis of the reflective optical element and including rotation axis is defined as an auxiliary plane, the auxiliary plane intersecting the reflective optical element to form a virtual line of intersection, the virtual line of intersection dividing the reflective optical element into a first segment connected a second segment, the second segment being closer to the scanning module than the first segment, the weight projection and the weight boss being respectively positioned on opposite sides of the auxiliary surface, the weight projection being positioned on a side of the auxiliary surface opposite to the first segment, and the weight boss being positioned on a side of the auxiliary surface opposite to the second segment.

22. The laser measuring device of claim 3, wherein:
the mounting frame includes a connecting ring; and
the scanning module further includes a scanning housing, the scanning housing including an annular scanning heat dissipation part, a plurality of heat dissipation teeth formed at intervals on an inner wall of the connecting ring, the plurality of heat dissipation teeth extending along an axial direction of the connecting ring, the connecting ring being sleeved outside the scanning heat dissipation part, and the plurality of heat dissipation teeth being spaced from an outer surface of the scanning heat dissipation part.

23. The laser measuring device of claim 1, wherein:
the scanning module further includes a scanning housing, the scanning housing including a scanning mounting base; and
the reflection module further includes a detector and a rotatable mounting frame, the reflective optical element being mounted on the mounting frame, the detector including a code disc and at least one optical switch, the code disc being disposed at one end of the mounting frame close to the scanning module, the at least one optical switch being disposed on the scanning mounting base, the code disc cooperating with the at least one optical switch and used to detect a rotation parameter of the reflective optical element.

24. The laser measuring device of claim 23, wherein:
a plurality of light-transmissive areas and a plurality of non-light-transmissive areas are alternately distributed along a same circumference of the code disc;
the plurality of light-transmissive areas includes a plurality of first light-transmissive areas having a same width, and a second light-transmissive area having a width different from the plurality of first light-transmissive areas, the width being a circumferential width along the circumference; or,
the plurality of non-light-transmissive areas include a plurality of first non-light-transmissive areas with the same width, and a second non-light-transmissive area with a width different from the width of the plurality of first non-light-transmissive areas, the width being the circumferential width along the circumference.

25. The laser measuring device of claim 24, wherein:
the code disc includes the plurality of light-transmissive areas, the plurality of non-light-transmissive areas, and the second light-transmissive area, the plurality of light-transmissive areas and the plurality of non-light-transmissive areas being alternately disposed along a circle, the second light-transmissive area not being positioned on the circle, the plurality of light-transmissive areas have the same width, the plurality of non-light-transmissive areas have the same width, the width being the circumferential width along the circumference.

26. The laser measuring device of claim 1, further comprising:
a housing, wherein the light transceiving module, the scanning module, and the reflection module are all disposed in the housing, the housing including a base and a mask, the light transceiving module being mounted on the base, the mask including an annular side shell and a top wall positioned at one end of the side shell, an end of the side shell away from the top wall being mounted on the base, the reflection module being mounted on the top wall and received in the mask, the laser pulse emitted by the light transceiving module passing through the side shell and being projected to the detection object after being reflected by the reflective optical element.

27. The laser measuring device of claim 26, wherein:
the reflection module includes a sleeve and a rotating shaft rotatably passing through the sleeve;
a mounting hole is disposed on the top wall, one end of the rotating shaft extending from the mounting hole to outside the mask; and
the laser measuring device further includes an end cover, the end cover including a cover body and a ring-shaped coupling part extending from a surface of the cover body, the coupling part being combined with the sleeve, and the cover body being combined with the top wall and configured to close the mounting hole.

28. The laser measuring device of claim 27, further comprising:
a plurality of locking members, a plurality of fixing holes being opened on the top wall, the sleeve being formed with a mounting platform, the plurality of locking members respectively passing through the corresponding fixing holes and combined with the mounting platform to mount the sleeve on the top wall, the cover body being disposed on the top wall and covering the plurality of fixing holes.

29. The laser measuring device of any one of claims 1-28, wherein:
the scanning module further includes a scanning driver; and
the reflective optical element includes a prism, the prism being positioned on an optical path, a thickness of the prism being ununiformed, and the scanning driver being used to drive the prism to rotate to change the transmission direction of the laser pulse passing through the prism.

30. The laser measuring device of claim 29, wherein the scanning driver includes:
a scanning rotor assembly, the scanning rotor assembly including an annular scanning yoke and a scanning magnet sleeved outside the scanning yoke, the scanning yoke being formed with a receiving cavity for receiving the prism;
a scanning stator assembly, the scanning stator assembly including a scanning housing and a scanning winding, the scanning housing being sleeved outside the scanning magnet, the scanning winding being disposed on the scanning housing and positioned between the scanning housing and the scanning magnet; and
a scanning bearing disposed between the scanning housing and the scanning yoke.

31. The laser measuring device of claim 30, wherein:
the light transceiving module includes a distance measuring housing, the distance measuring housing including a distance measuring mounting seat positioned at an end close to the scanning module; and
the scanning module includes a scanning mounting base positioned close to an end of the light transceiving module, the scanning mounting base being mounted on the distance measuring mounting seat.

32. The laser measuring device of claim 31, wherein:
the distance measuring mounting seat includes a plurality of distance measuring support seats disposed at intervals, the plurality of distance measuring support seats surrounding the light exiting path of the light transceiving module at intervals; and
the scanning mounting base includes a plurality of scanning support bases respectively corresponding to the plurality of distance measuring support seats, each scanning support base being combined with a corresponding distance measuring support seat.

33. The laser measuring device of claim 1, wherein the light transceiving module includes:
a light source configured to emit the laser pulse;
an optical path changing element, the optical path changing element being disposed on an optical path of the light source and configured to change an optical path of the laser pulse;
a collimating element, the collimating element being disposed on the optical path changed by the optical path changing element, the collimating element being configured to collimate the laser pulse passing through the collimating element, project the collimated laser pulse to the reflective optical element, and converge the laser pulse reflected by the reflective optical element; and
a detector, the detector being disposed on the optical path of the laser pulse converged by the collimating element, the detector being configured to convert the laser pulse converged on the detector into an electrical signal.

34. A UAV comprising:
a body; and
the laser measuring device according to any one of claims 1 to 33, the laser measuring device being disposed on the body.

35. A laser measuring device, comprising:
a light transceiving module configured to emit laser pulses and receiving laser pulses reflected by a detection object; and
a reflection module disposed on a light exiting path of the light transceiving module, wherein
the reflection module includes a rotatable reflective optical element and a weight assembly relative fixed to the reflective optical element, the reflective optical element being configured to rotate around a rotation axis, the reflective optical element includes a reflective surface facing the light transceiving module, the reflective surface being inclined with respect to the rotation axis, the weight assembly is configured to weight the reflective optical element to reduce a centrifugal force couple received by the reflective optical element during rotation, the reflective optical element being configured to reflect the laser pulse passing through the reflective optical element.

36. The laser measuring device of claim 35, further comprising:
a housing, the light transceiving module, a scanning module, and the reflection module are all disposed in the housing, one end of the reflection module is rotatably fixed on the housing, and the other end is a free end.

37. The laser measuring device of claim 35, further comprising:
a housing, the light transceiving module, a scanning module, and the reflection module all being disposed in the housing, wherein the reflection module includes
a mounting frame, the reflective optical element being mounted on the mounting frame and positioned on the lighting exiting path; and
a reflection driver, the reflection driver being mounted on the housing and configured to drive the mounting frame to rotate relative to the housing to drive the reflective optical element to rotate around a rotation axis.

38. The laser measuring device of claim 37, wherein:
the rotation axis is parallel to an optical axis of the light transceiving module.

39. The laser measuring device of claim 37, wherein:
the rotation axis coincides with the optical axis of the light transceiving module.

40. The laser measuring device of claim 37, wherein:
a plane parallel to a central axis of the reflective optical element and including rotation axis is defined as an auxiliary plane, the auxiliary plane intersecting the reflective optical element to form a virtual line of intersection, the virtual line of intersection dividing the reflective optical element into a first segment connected a second segment, the second segment being closer to the scanning module than the first segment, and a length of the first segment being greater than a length of the second segment.

41. The laser measuring device of claim 37, wherein reflection driver includes:
a reflective stator assembly, the reflective stator assembly being mounted on the housing; and
a reflective rotor assembly rotating around the rotation axis, the reflective stator assembly being used to drive the reflective rotor assembly to rotate around the rotation axis.

42. The laser measuring device of claim 41, wherein the reflective stator assembly includes:
a sleeve, the sleeve including a fixing end and a mounting end opposed to each other, the fixing end being fixed on the housing;
a winding body, the winding body being sleeved on the mounting end; and
a reflective winding mounted on the winding body.

43. The laser measuring device of claim 42, wherein the reflective rotor assembly includes:
a rotor, the rotor including a rotor cover and a rotating shaft, the rotor cover including a bottom wall and an annular side wall extending from the bottom wall, the side wall and the bottom wall enclosing a receiving space, the rotating shaft extending from the bottom wall into the receiving space and passing through the sleeve, the winding body and the reflective winding being received in the receiving space; and
a magnet, the magnet being received in the receiving space and positioned opposite to the reflective winding body.

44. The laser measuring device of claim 43, wherein the reflection driver further includes:
a reflective positioning assembly positioned between the reflective stator assembly and the reflective rotor assembly, the reflective positioning assembly being used to restrict the reflective rotor assembly from rotating around the fixed rotating shaft; and
the reflective rotor assembly includes:
a first bearing positioned in the mounting end, the first bearing being sleeved on the rotating shaft and positioned between an inner surface of the sleeve and the rotating shaft, and
a second bearing, the second bearing positioned in the fixing end, the second bearing being sleeved on the rotating shaft and positioned between the inner surface of the sleeve and the rotating shaft.

45. The laser measuring device of claim 44, wherein the reflection driver further includes:
a reflective fixing assembly, the reflective fixing assembly including a shaft sleeve, the shaft sleeve being sleeved on the rotating shaft and abutting against an end of the second bearing away from the first bearing; and
a fastener, the fastener being mounted on an end of the rotating shaft away from the rotor cover and abutting against the shaft sleeve on the second bearing.

46. The laser measuring device of claim 45, wherein the reflective fixing assembly includes:
an elastic member, the elastic member being sleeve on the rotating shaft, and two ends of the elastic member being respectively abutting against the shaft sleeve and the fastener.

47. The laser measuring device of claim 43, wherein:
the reflective rotor assembly further includes a mounting plate extending from an outer surface of the side wall; and
the weight assembly includes a weight projection, the weight projection being disposed on the mounting plate.

48. The laser measuring device of claim 43, wherein the reflective rotor assembly further includes a mounting plate extending from an outer surface of the side wall, the mounting frame includes:
two connecting arms mounted on the mounting plate at intervals, one end of each connecting arm being connected to the mounting plate, the other end of each connecting arm extending toward a side close to the light transceiving module, and the reflective optical element being positioned between the two connecting arms; and
a connecting ring, the connecting ring being connected to the other ends of the two connecting arms and disposed between the two connecting arms.

49. The laser measuring device of claim 48, wherein:
the two connecting arms are symmetrical about an axis of the connecting ring, and the axis of the connecting ring coincides with the rotation axis.

50. The laser measuring device of claim 48, wherein the reflective optical element includes:
a reflective surface facing the light transceiving module, the reflective surface being relatively inclined with respect to the rotation axis; and
two side surfaces, each of the side surfaces being connected with the reflective surface, and the two side surfaces being respectively mounted on the two connecting arms.

51. The laser measuring device of claim 48, wherein:
the weight assembly further a weight boss, the weight boss being disposed on the connecting ring.

52. The laser measuring device of claim 37, wherein:
the reflection driver includes a mounting plate, the mounting frame including two connecting arms mounted on the mounting plate at intervals and a connecting ring disposed between the two connecting arms, the connecting ring and the mounting plate being positioned at opposite ends of the connecting arm, and the reflective optical element being positioned between the connecting ring and the mounting plate; and
the weight assembly includes a weight projection and a weight boss, the weight projection being mounted on the mounting plate, and the weight boss being disposed on the connecting ring.

53. The laser measuring device of claim 52, wherein:
a plane parallel to a central axis of the reflective optical element and including rotation axis is defined as an auxiliary plane, the auxiliary plane intersecting the reflective optical element to form a virtual line of intersection, the virtual line of intersection dividing the reflective optical element into a first segment connected a second segment, the second segment being closer to the scanning module than the first segment, the weight projection and the weight boss being respectively positioned on opposite sides of the auxiliary surface, the weight projection being positioned on a side of the auxiliary surface opposite to the first segment, and the weight boss being positioned on a side of the auxiliary surface opposite to the second segment.

54. The laser measuring device of claim 35, further comprising:
a housing, wherein the light transceiving module, the scanning module, and the reflection module are all disposed in the housing, the housing including a base and a mask, the light transceiving module being mounted on the base, the mask including an annular side shell and a top wall positioned at one end of the side shell, an end of the side shell away from the top wall being mounted on the base, the reflection module being mounted on the top wall and received in the mask, the laser pulse emitted by the light transceiving module passing through the side shell and being projected to the detection object after being reflected by the reflective optical element.

55. The laser measuring device of claim 54, wherein:
the reflection module includes a sleeve and a rotating shaft rotatably passing through the sleeve;
a mounting hole is disposed on the top wall, one end of the rotating shaft extending from the mounting hole to outside the mask; and
the laser measuring device further includes an end cover, the end cover including a cover body and a ring-shaped coupling part extending from a surface of the cover body, the coupling part being combined with the sleeve, and the cover body being combined with the top wall and configured to close the mounting hole.

56. The laser measuring device of claim 55, further comprising:
a plurality of locking members, a plurality of fixing holes being opened on the top wall, the sleeve being formed with a mounting platform, the plurality of locking members respectively passing through the corresponding fixing holes and combined with the mounting platform to mount the sleeve on the top wall, the cover body being disposed on the top wall and covering the plurality of fixing holes.

57. The laser measuring device of any one of claims 35 to 56, further comprising:
a scanning module, the scanning module and the reflection module being sequentially disposed on the light exiting path of the light transceiving module, the scanning module including a rotatable transmissive optical element, the transmissive optical element being configured to change the transmission direction of the laser pulse passing through the scanning module 30.

58. The laser measuring device of claim 57, wherein:
the reflection module includes a mounting frame for mounting the reflective optical element, an end of the mounting frame close to the scanning module including a connecting ring, an inner wall of the connecting ring being formed with a plurality of heat dissipation teeth disposed at intervals, the plurality of heat dissipation teeth extending along an axial direction of the connecting ring;
the scanning module includes a scanning housing, the scanning housing including an annular scanning heat dissipation part, the connecting ring being sleeved outside the scanning heat dissipation part, the plurality of heat dissipation teeth being spaced from an outer surface of the scanning heat dissipation part.

59. The laser measuring device of claim 58, wherein:
the reflection module includes the mounting frame and a detector for mounting the reflective optical element, the end of the mounting frame close to the scanning module including the connecting ring, the detector including a code disc and at least one optical switch, the code disc being disposed at an end of the connecting ring away from the connecting arm;
the scanning module includes the scanning housing, the scanning housing including a scanning mounting base, the at least one optical switch being disposed on the scanning mounting base, the code disc cooperating with the at least one optical switch and used to detect a rotation parameter of the reflective optical element.

60. The laser measuring device of claim 59, wherein:
a plurality of light-transmissive areas and a plurality of non-light-transmissive areas are alternately distributed along a same circumference of the code disc;
the plurality of light-transmissive areas includes a plurality of first light-transmissive areas having a same width, and a second light-transmissive area having a width different from the plurality of first light-transmissive areas, the width being a circumferential width along the circumference; or,
the plurality of non-light-transmissive areas include a plurality of first non-light-transmissive areas with the same width, and a second non-light-transmissive area with a width different from the width of the plurality of first non-light-transmissive areas, the width being the circumferential width along the circumference.

61. The laser measuring device of claim 59, wherein:
the code disc includes the plurality of light-transmissive areas, the plurality of non-light-transmissive areas, and the second light-transmissive area, the plurality of light-transmissive areas and the plurality of non-light-transmissive areas being alternately disposed along a circle, the second light-transmissive area not being positioned on the circle, the plurality of light-transmissive areas have the same width, the plurality of non-light-transmissive areas have the same width, the width being the circumferential width along the circumference.

62. The laser measuring device of claim 35, further comprising:
a scanning module, the scanning module and the reflection module being sequentially disposed on the light exiting path of the light transceiving module, the scanning module including a scanning driver and a prism, the prism being positioned on an optical path, a thickness of the prism being ununiformed, and the scanning driver being used to drive the prism to rotate to change the transmission direction of the laser pulse passing through the prism.

63. The laser measuring device of claim 62, wherein the scanning driver includes:
a scanning rotor assembly, the scanning rotor assembly including an annular scanning yoke and a scanning magnet sleeved outside the scanning yoke, the scanning yoke being formed with a receiving cavity for receiving the prism;
a scanning stator assembly, the scanning stator assembly including a scanning housing and a scanning winding, the scanning housing being sleeved outside the scanning magnet, the scanning winding being disposed on the scanning housing and positioned between the scanning housing and the scanning magnet; and
a scanning bearing disposed between the scanning housing and the scanning yoke.

64. The laser measuring device of claim 63, wherein:
the light transceiving module includes a distance measuring housing, the distance measuring housing including a distance measuring mounting seat positioned at an end close to the scanning module; and
the scanning module includes a scanning mounting base positioned close to an end of the light transceiving module, the scanning mounting base being mounted on the distance measuring mounting seat.

65. The laser measuring device of claim 64, wherein:
the distance measuring mounting seat includes a plurality of distance measuring support seats disposed at intervals, the plurality of distance measuring support seats surrounding the light exiting path of the light transceiving module at intervals; and
the scanning mounting base includes a plurality of scanning support bases respectively corresponding to the plurality of distance measuring support seats, each scanning support base being combined with a corresponding distance measuring support seat.

66. The laser measuring device of claim 65, wherein the light transceiving module includes:
a light source configured to emit the laser pulse;
an optical path changing element, the optical path changing element being disposed on an optical path of the light source and configured to change an optical path of the laser pulse;
a collimating element, the collimating element being disposed on the optical path changed by the optical path changing element, the collimating element being configured to collimate the laser pulse passing through the collimating element, project the collimated laser pulse to the reflective optical element, and converge the laser pulse reflected by the reflective optical element; and
a detector, the detector being disposed on the optical path of the laser pulse converged by the collimating element, the detector being configured to convert the laser pulse converged on the detector into an electrical signal.

67. A UAV comprising:
a body; and
the laser measuring device according to any one of claims 35 to 66, the laser measuring device being disposed on the body.
